# EUROPÄISCHE PATENTANMELDUNG

(11) **EP 0 960 842 A1**
(43) Veröffentlichungstag der Anmeldung: **01.12.1999**
(21) Anmeldenummer: 99250145.2
(22) Anmeldetag: 04.05.1999
(51) Int. Cl.: B65G 47/26

(54) **Rollenbahn mit angetriebenen Tragrollen**

(30) Priorität: 28.05.1998 DE 19825387; 02.07.1998 DE 19831220
(71) Anmelder: MANNESMANN Aktiengesellschaft, 40213 Düsseldorf (DE)
(72) Erfinder: Jahns, Werner Dipl.-Ing., 63500 Seligenstadt (DE)
(74) Vertreter: Meissner, Peter E., Dipl.-Ing.

(57) **Zusammenfassung**

Die Erfindung betrifft eine Rollenbahn (1) für Stückgut (6), insbesondere für schwere Stückgüter wie beladene Paletten (6), mit einer Vielzahl von in Förderrichtung (F) hintereinander und voneinander beabstandet angeordneten, quer zur Förderrichtung (F) ausgerichteten sowie eine Förderfläche (5) für das Fördergut (6) bildenden Tragrollen (2), mit mindestens einem endlos umlaufenden, in Förderrichtung (F) sowie entlang der der Förderfläche (5) gegenüberliegenden Seite der Tragrollen (2) verlaufenden Antriebsriemen (7), der zum Antrieb der Tragrollen (2) über mittels Verstellmittel (12) in Richtung der Tragrollen (2) bewegbarer Andrückrollen (11) an die Tragrollen (2) anlegbar ist.

Um eine Rollenbahn (1) für Stückgut (6), insbesondere für schwere Stückgüter wie beladene Paletten (6), zu schaffen, die eine optimierte Antriebsleistung bietet, wird vorgeschlagen, daß je angetriebener Tragrolle (2) eine Andrückrolle (11) vorgesehen ist, die an der der Förderfläche (5) gegenüberliegenden Seite der jeweiligen Tragrolle (2) angeordnet ist.

## Beschreibung

Die Erfindung betrifft eine Rollenbahn für Stückgut, insbesondere für schwere Stückgüter wie beladene Paletten, gemäß dem Oberbegriff des Anspruchs 1.

Aus der europäischen Patentschrift EP 0 543 336 A1 ist bereits eine Staurollenbahn bekannt, deren Tragrollen zum staudrucklosen Fördern von Stückgut abschnittsweise antreib- bzw. stillsetzbar sind. Der Antrieb erfolgt über einen endlos umlaufenden und in Förderrichtung verlaufenden Flachriemen, dessen Obertrum zur Übertragung der Antriebskräfte über Andrückrollen von unten an die Tragrollen angegehoben werden kann. Die Andrückrollen sind jeweils an den Enden eines Doppelhebels gelagert, der um eine horizontal und quer zur Förderrichtung ausgerichtete Achse schwenkbar ist. In Förderrichtung gesehen sind die Andrückrollen jeweils in jedem zweiten Zwischenraum zwischen den mit Abstand aufeinanderfolgenden Tragrollen angeordnet. Die Hubbewegung der Andrückrolle und somit das Anheben des Flachriemens an die Tragrolle zur Übertragung der Antriebskräfte erfolgt durch Verschwenkung des Doppelhebels über einen hieran angreifenden Pneumatikzylinder. Hierdurch werden die Andrückrollen derart weit angehoben, daß eine geringe einseitige Umschlingung der Tragrollen durch den Flachriemen erfolgt. Die Pneumatikzylinder eines Abschnittes der Staurollenbahn sind jeweils steuerungstechnisch miteinander verbunden, um somit die Andrückrollen eines Abschnittes gemeinsam anzuheben oder abzusenken.

Das Abbremsen der Tragrollen erfolgt über Bremselemente, die jeweils paarweise an dem der Andrückrolle gegenüberliegenden Ende des Doppelhebels in der Art angeordnet sind, daß die beiden einem Doppelhebel benachbarten Tragrollen gemeinsam abgebremst werden können. Hierzu werden die Bremselemente von unten an die Tragrollen angepreßt. Da die Andrückrolle und die beiden Bremselemente an den gegenüberliegenden Enden des gemeinsamen Doppelhebels angeordnet sind, werden je nach Schwenkstellung des Doppelhebels die Tragrollen angetrieben oder abgebremst.

Im Zusammenhang mit dieser Antriebsart für die Staurollenbahnabschnitte können jedoch Probleme auftreten, wenn Fördergüter mit hohem Gewicht in kurzer Zeit angetrieben oder bei einem sog. Blockabzug zusätzlich gleichzeitig mehrere Staurollenbahnabschnitte angetrieben werden sollen. Hierbei können Dehnungen im Antriebssgurt und Schlupf zwischen dem Flachriemen und den Tragrollen auftreten, sowie Reduzierungen des Umschlingungswinkels zwischen Tragrolle und Flachriemen hervorgerufen werden, die allesamt zu einer Verzögerung der Beschleunigung führen und somit zu einem nicht reproduzierbaren Beschleunigungsverhalten des Staurollenförderers. Um etwaig hierdurch hervorgerufenen Kollisionen der Stückguter vorzubeugen, sind Sicherheiten durch Verlängerung der Stauplatzabschnitte vorzusehen. Außerdem ist durch den auftretenden Schlupf der Antriebsriemen auch einem erhöhten Verschleiß ausgesetzt.

Ein ähnlich ausgebildete Staurollenbahn ist aus dem US-Patent 3,420,356 bekannt. Auch hier erfolgt der Antrieb der Tragrollen über einen von unten an die Tragrollen anhebbaren sowie angetriebenen Flachriemen. Das Anheben des Flachriemens erfolgt über Andrückrollen, die jeweils unterhalb der Tragrollen angeordnet sind. Die Andrückrollen selber sind ortsfest und somit nicht in Vertikalrichtung verstellbar gelagert und weisen an ihren Umfangsflächen einen abgeflachten Bereich auf. Wenn dieser abgeflachte Bereich den Tragrollen zugewandt ist, gleitet der Flachriemen hierüber hinweg ohne gleichzeitig die Tragrollen anzutreiben. Durch Drehen der Andrückrollen mit ihrem nicht abgeflachten Bereich zur Tragrolle wird ein Anheben des Flachriemens von unten an die Tragrolle erreicht und diese somit angetrieben. Durch die spezielle Umfangsform der Andrückrolle werden die Tragrolle entsprechend der Drehung der Andrückrolle abwechselnd angetrieben und nicht angetrieben. Wird nun im Staubetrieb ein Fördergutteil von außen auf den Tragrollen angehalten, ist zur Unterbindung der weiteren Übertragung der Antriebskraft von dem Flachriemen an die Tragrolle eine spezielle Ausbildung der Andrückrolle vorgesehen. Hierzu ist an der Andrückrolle seitlich eine weitere Antriebsscheibe angeordnet, deren Durchmesser so gewählt ist, dass diese einen ständigen Kontakt mit der Tragrolle hat. Bei einem aufgestauten Fördergutteil wird von diesem die Tragrolle und somit die Andrückrolle in ihrer Drehbewegung gehemmt, hierdurch wird gerade noch erreicht, dass eine leichte Drehung der Antriebsrolle zum Lösen des Flachriemens von der Unterseite der Tragrollen möglich ist, jedoch nicht mehr dessen Weiterdrehung zum Anheben des Flachgurtes von unten an die Tragrolle, solange das auf der Tragrolle ruhende Fördergutteil die Andrückrolle in ihrer Drehbewegung hemmt.

Diese Staurollenbahn zeigt zwar unter jeder Tragrolle eine Andrückrolle, jedoch haben diese jeweils eine speziell ausgebildete Umfangsfläche mit einem abgeflachten Bereich, so dass eine gewünschte intermittierende Antriebsweise der Staurollenbahn möglich ist. Eine Bewegung der Andrückrollen in Vertikalrichtung zum Anheben des Flachgurtes erfolgt nicht.

Des weiteren ist in der deutschen Patentschrift DE 26 50 205 C2 eine Staurollenbahn beschrieben, deren Tragrollen jeweils eine Antriebsrolle zugeordnet ist, die direkt zur Übertragung der Antriebskräfte an die Unterseite der Tragrolle anstellbar ist. Die Antriebsrollen weisen hierbei zwei umlaufende Verzahnungen auf. In die erste Verzahnung greift eine endlos umlaufende Antriebskette ein, um die Antriebsrollen anzutreiben. Der zweite Zahnkranz der Antriebsrolle ist durch eine Verschwenkbewegung der Antriebsrolle in Eingriff mit einer komplementären und an der Tragrolle angeordneten Verzahnung bringbar. Die Verschwenkbewegung der Antriebsrollen, um die Verzahnungen der Tragrollen und der Antriebsrollen in Kontakt zu bringen bzw. zu lösen, erfolgt über ein die Antriebsrollen eines Stauplatzes miteinander verbindendes Gestänge.

Diese Antriebsart der Tragrollen erweist sich als nachteilig, da zum Herstellen der Antriebsverbindung die verschwenkten Antriebsrollen mit ihrer Verzahnung schlagartig in die Verzahnung der Tragrollen eingreifen und somit das Stückgut hohen Beschleunigungen ausgesetzt wird. Daher ist diese Antriebsart ungeeignet für empfindliches Fördergut. Darüber hinaus sind die Verzahnungen durch das schlagartige Ineinandergreifen zum Herstellen der Antriebsverbindung einem erhöhten Verschleiß ausgesetzt.

Ferner ist aus der US-Patentschrift US 4,109,783 eine weitere Staurollenbahn bekannt, deren Tragrollen über von unten an diese reibschlüssig anpreßbare Antriebsrollen antreibbar sind. Jede Antriebsrolle ist hierbei in einer um eine quer zur Förderrichtung ausgerichtete horizontale Achse schwenkbaren Schwinge gelagert, die über einen Pneumatikzylinder von unten in Richtung der Tragrollen anhebbar ist, um die Antriebsrolle mit zwei aufeinanderfolgenden Tragrollen in Kontakt zu bringen. Auch hier werden die Antriebsrollen über eine endlos umlaufende Kette und eine Verzahnung angetrieben.

Bei dieser Antriebsart der Tragrollen der Staurollenbahn kann sich als nachteilig erweisen, daß einerseits nicht jede Tragrolle angetrieben ist und andererseits durch das Anpressen der Antriebsrolle jeweils an zwei in Förderrichtung aufeinanderfolgende Tragrollen die Anpreßkräfte in Anbetracht der verschwenkbaren Lagerung der Antriebsrolle an der Schwinge stark von der Einhaltung der Einbauabstände der aufeinanderfolgenden Tragrollen abhängig sind.

Der vorliegenden Erfindung liegt die Aufgabe zugrunde, eine Rollenbahn für Stückgut, insbesondere für schwere Stückgüter wie beladene Paletten, zu schaffen, die eine optimierte Antriebsleistung bietet.

Diese Aufgabe wird bei einer Rollenbahn mit bremsbaren Tragrollen für das Fördergut durch die im Anspruch 1 aufgeführten Merkmale gelöst. Vorteilhafte Ausgestaltungen der Erfindung sind in den Unteransprüchen 2 bis 7 angegeben.

Erfindungsgemäß wird durch die Zuordnung je einer Andrückrolle zum Anpressen des endlos umlaufenden Antriebsriemens von unten an die zugeordnete Tragrolle erreicht, daß der Anpreßdruck des Antriebsriemens auf die Oberfläche der Tragrolle optimiert wird. Hierdurch ist ein schnelles und leises Anlaufen der Tragrollen möglich. Auch wird durch diese Art der direkten Anpressung des Antriebsriemens an die Oberfläche der Tragrolle erreicht, daß bei bekanntem Reibungsbeiwerten zwischen der Oberfläche der Tragrolle, dem Antriebsriemen und der Anpreßrolle der Reibschluß direkt abhängig von der Anpreßkraft der Anpreßrolle wird und somit auch schwere Stückgütern, wie z. B. beladene Paletten, die etwa ein Gewicht von etwa 300 bis zu 2000 kg aufweisen, zuverlässig angetrieben werden. Das Leergewich der Palette beträgt etwa 30 kg. Um eine optimale Einstellung der Anpresskraft der Anpressrolle zu erreichen, ist für jede Anpressrolle ein eigenes Verstellmittel vorgesehen. Hierdurch können besonders einfach die Anpresskraft beeinflussende Bautoleranzen ausgeglichen werden. Auch können Toleranzänderungen durch Verschleiß kompensiert werden, da nicht der Verstellweg sondern der Arbeitsdruck die Anpresskraft bestimmt.

In vorteilhafter Ausführung sind die Andrückrollen bei horizontal ausgerichteter Förderfläche mit ihren Achsen im wesentlichen in einer vertikalen Ebene mit der Drehachse der zugeordneten Tragrolle ausgerichtet. Die Ausbildung des Verstellmittels zum Bewegen der Andrückrollen in Richtung der Tragrollen in Form einer pneumatischen Kolben-/Zylindereinheit hat sich als vorteilhaft herausgestellt. Die Anordnung der Andrückrollen an einem Ende eines um eine quer zur Förderrichtung und horizontal ausgerichtete Schwenkachse bewegbaren Hebel ist von Vorteil, da hierdurch in konstruktiv einfacher Weise die Andrückrollen während ihrer Anstellbewegung geführt werden können. Hierbei ist die Schwenkachse des Hebels von einem U-förmigen Halteelement getragen, das auf dem Tragrahmen des Rollenförderers abgestützt ist.

Als vorteilhaft erweist sich auch, den Antriebsriemen als Zahnriemen auszubilden, da hierdurch einerseits Schlupf zwischen den Antriebs- und Umlenkscheiben des endlos umlaufenden Zahnriemens vermieden wird und andererseits durch die höhere Festigkeit gegenüber einem normalen Flachriemen der Zahnriemen unter Belastung zu geringeren Längendehnungen neigt. Hierdurch ist zusätzlich gewährleistet, daß auch eine reproduzierbare Beschleunigung von schweren Stückgütern erfolgen kann. Als vorteilhaft hat sich in Verbindung mit der Ausbildung des Antriebsriemens als Zahnriemen herausgestellt, diesen auf seiner gezahnten Seite mit einem in Förderrichtung verlaufenden Steg auszubilden, der über die Zähne hinausragt, da hierdurch der Zahnriemen in einfacher Weise von den Andrückrollen geführt und angedrückt werden kann. Die Andrückrollen weisen hierzu eine umlaufende und komplementär ausgebildete Nut auf. Außerdem ist die Andrückrolle mit ihrer Oberfläche so ausgebildet, daß zwischen den Zähnen des Antriebsriemen und der Oberfläche der Andrückrolle ein Spalt verbleibt und somit eine Geräuschentwicklung vermieden wird, die durch Ablaufen der Zähne über die zylindrische oder ballige Oberfläche der Andrückrolle hervorgerufen werden könnte.

Die Erfindung wird nachfolgend anhand eines in einer Zeichnung dargestellten Ausführungsbeispiels näher beschrieben. Die Rollenbahn ist hierbei als Staurollenbahn ausgebildet. Es zeigen:
- Figur 1: eine Ansicht eines Abschnittes einer Staurollenbahn mit Tragrollen im angetriebenen Zustand,
- Figur 2: eine Ausschnittvergrößerung von Figur 1 aus dem Bereich einer Andrückrolle,
- Figur 3: eine vergrößerte, teilweise Schnittansicht von Figur 1 entlang der Schnittlinie I - I.

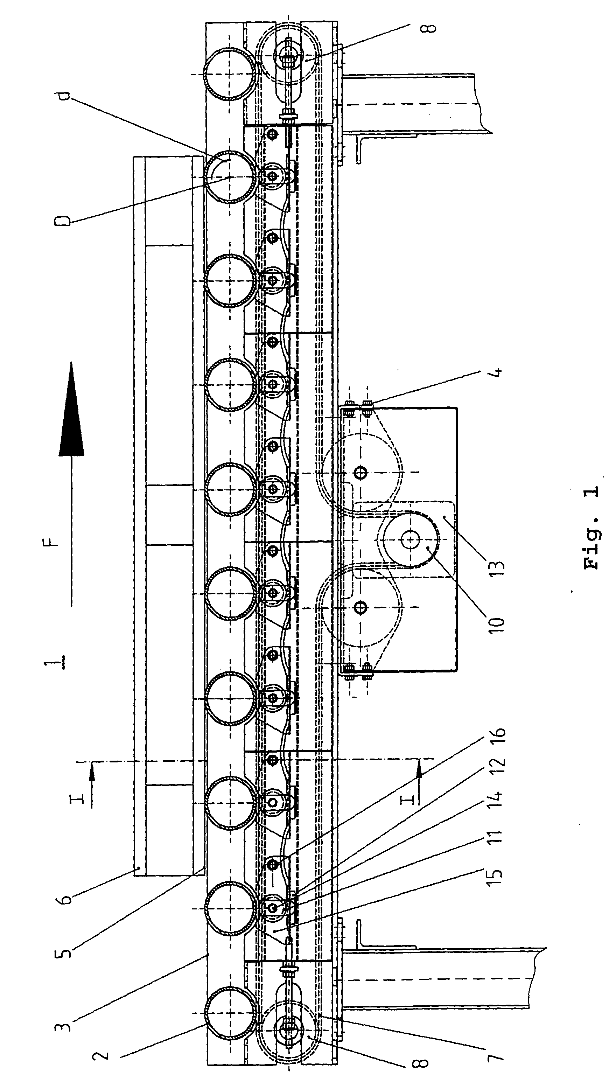

Die Figur 1 zeigt eine Ansicht eines Abschnittes einer als Staurollenbahn ausgebildeten Rollenbahn 1 mit Tragrollen 2 im angetriebenen Zustand. Die Rollenbahn 1 besteht im wesentlichen aus zwei parallel und mit zueinander verlaufenden Längsträgern 3, die über Querträger 4 miteinander verbunden sind und zwischen denen die Tragrollen 2 gelagert sind. Die Tragrollen 2 bilden eine ebene Förderfläche 5 für das Stückgut 6 und deren Drehachsen D verlaufen quer zur Förderrichtung F sowie horizontal.

Jede Tragrolle 2 ist über einen als Zahnriemen ausgebildeten Antriebsriemen 7 in Drehrichtung d über Reibschluß antreibbar. Hierzu ist der Antriebsriemen 7 um zwei Umlenkscheiben 8, die zum Spannen des Antriebsriemens 7 verstellbar sind, und eine Antriebsscheibe 10 endlos umlaufend geführt und dessen oberes Trum ist von unten an die Tragrollen 2 anpreßbar. Die Umlenkscheiben 8 sind an den jeweiligen Enden des Abschnittes der Rollenbahn 1 an den Längsträgern 3 gelagert. In Vertikalrichtung gesehen ist die Antriebsscheibe 10, die von einem Elektromotor 13 antreibbar ist, unterhalb der Rollenbahn 1 angeordnet. Die Antriebsscheibe 10 und der Elektromotor 13 sind hierbei an dem Querträger 4 befestigt. Der Reibschluß zwischen dem Antriebsriemen 7 und den Tragrollen 2 wird durch Anheben des Obertrums des Antriebsriemens 7 in Richtung der Tragrollen 2 über Andrückrollen 11 erreicht. Jeder Tragrolle 2 ist eine Andrückrolle 11 zugeordnet, die bei horizontal ausgerichteter Förderfläche 5 jeweils unterhalb der Tragrolle 2 angeordnet ist und somit im angehobenen Zustand den Antriebsriemen 7 an die Unterseite der Tragrolle 2 andrückt. Vorzugsweise liegen bei horizontal ausgerichteter Förderfläche 5 die Drehachsen D der Tragrollen 2 und die Achsen 14 der zugeordneten Andrückrollen 11 in einer vertikalen Ebene.

Die für die Übertragung der Antriebskräfte bzw. deren Unterbrechung erforderlichen Hub- und Senkbewegungen der Andrückrollen 11 erfolgen jeweils über eine eigene pneumatische Kolben-/Zylindereinheit 12.

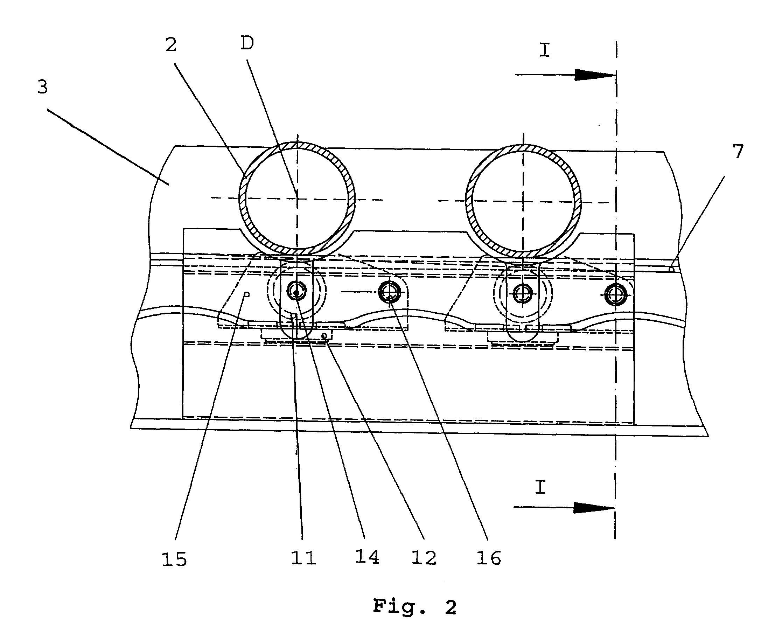

Die Anordnung der Andrückrolle 11 und deren Zusammenspiel mit der Kolben-/Zylindereinheit 12 ist der Figur 2 zu entnehmen, die eine Ausschnittsvergrößerung von Figur 1 aus dem Bereich der Andrückrolle 11 zeigt. Es ist ersichtlich, daß die Andrückrollen 11 jeweils mit ihrer horizontal und quer zur Förderrichtung sowie parallel zur Drehachse D der Tragrollen 2 ausgerichteten Achse 14 an einem Hebel 15 gelagert sind. Der Hebel 15 ist einseitig um eine Schwenkachse 16 an dem Längsträger 3 gelagert. Somit ist die Andrückrolle 11 in konstruktiv einfacher Weise für die Hub- und Senkbewegung geführt. Der Hebel 15 weist in Richtung der Achse 14 gesehen einen dreieckförmigen Querschnitt auf, so daß in der ersten und der zweiten Ecke die Schwenkachse 16 und die Achse 14 vorgesehen sind und im Bereich der dritten Ecke die pneumatische Kolben-/Zylindereinheit 12 angreift, die sich auf dem Längsträger 3 abstützt.

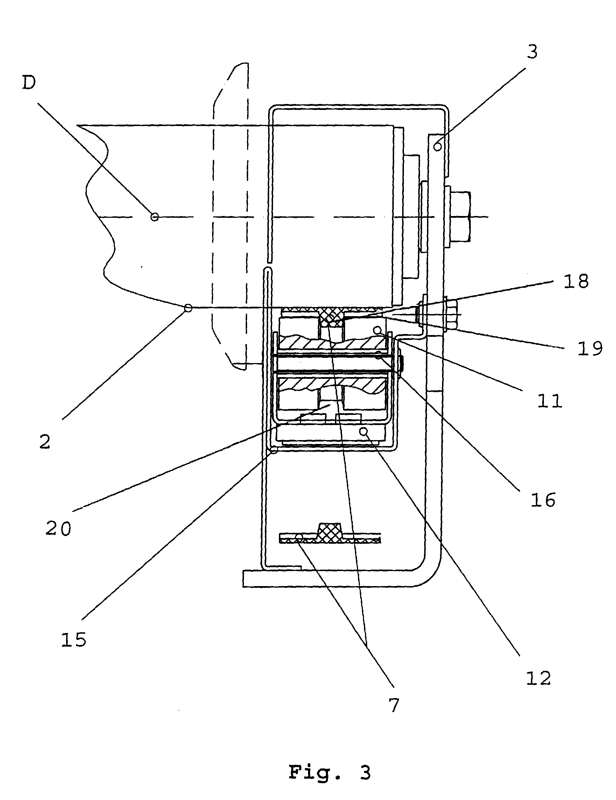

Desweiteren ist der Figur 3 zu entnehmen, die eine vergrößerte, teilweise Schnittansicht von Figur 1 entlang der Schnittlinie I-I zeigt, daß zwischen der Andrückrolle 11 und der ihr zugeordneten Tragrolle 2 der Antriebsriemen 7 geführt wird. Auch ist ersichtlich, daß die pneumatische Kolben-/Zylindereinheit 12 vorzugsweise besonders flachbauend ausgebildet ist. Desweiteren ist der spezielle Aufbau des Antriebsriemens 7 ersichtlich, der als Zahnriemen mit Zähnen 19 ausgebildet ist und einen in Förderrichtung verlaufenden Steg 18 aufweist. Der Steg 18 ragt hierbei über die Zähne 19 hinaus und wird in einer in der Umfangsfläche der Tragrolle 2 angeordneten sowie komplementär zu dem Steg ausgebildeten Nut 20. geführt

In Figur 1 ist nur ein Abschnitt einer Rollenbahn 1 zum staudrucklosen Anhalten des Stückgutes 6 dargestellt. Die Rollenbahn 1 besteht normalerweise aus einer Vielzahl von hintereinander angeordneten, getrennt voneinander antreib- und bremsbaren Abschnitten, deren Länge an das zu fördernde Stückgut 6 angepaßt ist. Je Abschnitt sind die Andrückrollen 11 über steuerungstechnisch miteinander verbundene pneumatische Kolben-/Zylindereinheiten 12 gemeinsam heb- und senkbar.

Zum Abbremsen der Tragrollen 2 und somit des Stückgutes 4 können nicht dargestellte Bremselemente verwendet werden, die jeweils jeder Tragrolle 2 zugeordnet sind, sowie ebenfalls über eine pneumatische Kolben-/Zylindereinheit von unten direkt an die Oberfläche der Tragrolle 2 anpreßbar sind. Auch ist denkbar einen fest eingespannten und parallel neben dem Antreibsriemen 7 verlaufenden Bremsriemen vorzusehen, der ebenfalls über Andrückrollen 11 an direkt an die Oberfläche der Tragrolle 2 anpreßbar ist.

### Bezugszeichenliste

- 1: Rollenbahn
- 2: Tragrolle
- 3: Längsträger
- 4: Querträger
- 5: Förderfläche
- 6: Stückgut
- 7: Antriebsriemen
- 8: Umlenkscheibe
- 9: Spannscheibe
- 10: Antriebsscheibe
- 11: Andrückrollen
- 12: pneumatische Kolben-/Zylindereinheit
- 13: Elektromotor
- 14: Achse
- 15: Hebel
- 16: Schwenkachse
- 18: Steg
- 19: Zähne
- 20: Nut
- d: Drehrichtung
- D: Drehachsen
- F: Förderrichtung

## Patentansprüche

1. Rollenbahn für Stückgut, insbesondere für schwere Stückgüter wie beladene Paletten, mit einer Vielzahl von in Förderrichtung hintereinander und voneinander beabstandet angeordneten, quer zur Förderrichtung ausgerichteten sowie eine Förderfläche für das Fördergut bildenden Tragrollen, mit mindestens einem endlos umlaufenden, in Förderrichtung sowie entlang der der Förderfläche gegenüberliegenden Seite der Tragrollen verlaufenden Antriebsriemen, der zum Antrieb der Tragrollen über mittels Verstellmittel in Richtung der Tragrollen bewegbarer Andrückrollen an die Tragrollen anlegbar ist,
dadurch gekennzeichnet,
daß je angetriebener Tragrolle (2) eine Andrückrolle (11) vorgesehen ist, die an der der Förderfläche (5) gegenüberliegenden Seite der jeweiligen Tragrolle (2) angeordnet ist.

2. Rollenbahn nach Anspruch 1,
dadurch gekennzeichnet,
daß für die Verstellbewegung der Andrückrollen (11) jeder Andrückrolle (11) ein eigenes Verstellmittel zugeordnet ist.

3. Rollenbahn nach Anspruch 1 oder 2,
dadurch gekennzeichnet,
daß die Verstellmittel für die Andrückrollen (11) jeweils als pneumatische Kolben-/Zylindereinheiten (12) ausgebildet sind.

4. Rollenbahn nach einem der Ansprüche 1 bis 3,
dadurch gekennzeichnet,
daß die Andrückrollen (11) bei horizontal ausgerichteter Förderfläche (5) mit ihren Achsen (14) im wesentlichen in einer vertikalen Ebene mit der Drehachse (D) der zugeordneten Tragrolle (2) liegen.

5. Rollenbahn nach einem der Anprüche 1 bis 4,
dadurch gekennzeichnet,
daß die Andrückrollen (11) jeweils an einem Ende eines Hebels (15) gelagert sind, der an seinem anderen Ende an einer Schwenkachse (16) gelagert ist, die horizontal sowie quer zur Förderrichtung (F) ausgerichtet und von einem u-förmigen Halteelement getragen ist, das auf einem Längsträger (3) der Rollenbahn (1) abgestützt ist.

6. Rollenbahn nach einem der Ansprüche 1 bis 5,
dadurch gekennzeichnet,
daß der Antriebsriemen (7) als Zahnriemen ausgebildet ist

7. Rollenbahn nach Anspruch 6,
dadurch gekennzeichnet,
daß der Antriebsriemen (7) auf seiner gezahnten Seite einen in Förderrichtung (F) verlaufenden Steg (18) aufweist, der über die Zähne (19) hinausragt und ausschließlich von einer in den Andrückrollen (11) umlaufend angeordneten Nut (20) getragen und geführt wird, wobei zwischen den Zähnen (19) und der Oberfläche der Andrückrolle (11) eine Spalt verbleibt.
